# EUROPÄISCHE PATENTSCHRIFT

(11) **EP 3 353 391 B1**
(45) Veröffentlichungstag und Bekanntmachung des Hinweises auf die Patenterteilung: **11.09.2019**
(21) Anmeldenummer: 16736500.6
(22) Anmeldetag: 11.07.2016
(51) Int. Cl.: F01L 3/14

(54) **GEKÜHLTES VENTIL FÜR VERBRENNUNGSMOTOREN MIT ENTLASTUNGSNUT**
COOLED VALVE FOR INTERNAL COMBUSTION ENGINES HAVING A LOAD RELIEF GROOVE
SOUPAPE REFROIDIE POUR MOTEURS À COMBUSTION INTERNE, COMPORTANT UNE RAINURE DE DÉCHARGE

(30) Priorität: 22.09.2015 DE 102015116010
(43) Veröffentlichungstag der Anmeldung: 01.08.2018
(73) Patentinhaber: Federal-Mogul Valvetrain GmbH, 30890 Barsinghausen (DE)
(72) Erfinder: KELLERMANN, Stefan, 30890 Barsinghausen (DE); BAYARD, Guido, 44369 Dortmund (DE)
(74) Vertreter: Becker Kurig Straus
(86) Internationale Anmeldenummer: PCT/EP2016/066408
(87) Internationale Veröffentlichungsnummer: WO 2017/050453

(56) Entgegenhaltungen:
- EP-A1- 1 193 375
- EP-A1- 2 357 326
- DE-A1-102006 061 128
- GB-A- 379 832
- JP-A- 2008 014 237
- US-A- 1 984 728

## Beschreibung

Die vorliegende Erfindung betrifft gekühlte Ventile für Verbrennungsmotoren. Spezieller betrifft die vorliegende Erfindung ein natriumgekühltes Auslassventil für einen Verbrennungsmotor, das eine erhöhte Lebensdauer gegenüber ähnlichen Ventilen des Standes der Technik aufweist.

Innengekühlte bzw. natriumgekühlte Abgasventile sind spätestens seit 1935 bekannt. Dokument JP 2008 014237 A offenbart ein solches innengekühltes Abgasventil. Dokument EP 1 193 375 A1 offenbartt ein Ventil mit einem Hohlraum.

Natriumkühlung und deren Effekte sind im Stand der Technik wohlbekannt, und die technischen Weiterentwicklungen der letzten Jahre betrafen hauptsächlich ein vergrößertes Kühlmittelvolumen im Bereich des Ventiltellers und vereinfachte Herstellungsverfahren, um natriumgekühlte Ventile kostengünstiger herstellen zu können.

Es besteht jedoch ein Bedarf, die Haltbarkeit von innengekühlten Ventilen zu verbessern, bei denen die Gefahr von Ventilteller- oder Schaftabrissen weiter verringert ist. Zudem besteht ein Bedarf nach innengekühlten Ventilen, die verbesserte Kühleigenschaften aufweisen. Gemäß der vorliegenden Erfindung wird ein gekühltes bzw- innengekühltes Ventil für Verbrennungsmotoren bereitgestellt, mit einem Ventilteller, einem Ventilschaft, sowie einem Hohlraum innerhalb des Ventilschafts und des Ventiltellers, und mit einem Kühlmittel, das in dem Hohlraum angeordnet ist. Das Kühlmittel füllt den Hohlraum nur teilweise und kann sich in dem Hohlraum bewegen. Das Ventil ist mindestens zweiteilig aufgebaut und weist an einer Ventiltellerfläche eine Öffnung auf, die mit einem Deckel verschlossen ist. Der Deckel ist mit mindestens einer Entlastungsnut versehen, die eine Fügestelle zwischen der Öffnung der Ventiltellerfläche und dem Deckel entlastet. Die Entlastung erfolgt durch eine erhöhte Elastizität in einem ringförmigen Bereich nahe des Randes des Deckels. Durch die erhöhte Elastizität kann sich der Deckel unter dem Druck der Brenngase oder unter thermischer Spannung konkav oder konvex verformen. Bei einer konkaven oder konvexen Verformung des Deckels, wird diese Biegebeanspruchung nicht mehr an die Fügestelle zwischen Deckel und Ventilteller übertragen, sondern resultiert in einer Biegung im Bereich der Entlastungsnut.

Im Wesentlichen wird eine Fügestelle bzw. eine Verbindungsstelle zwischen Deckel und Ventilteller durch eine Verdünnung des Materials des Deckels entlastet.

Das Ventil ist mindestens zweiteilig aufgebaut und weist an der Ventiltellerfläche eine Öffnung auf, die mit einem Deckel verschlossen ist. Der Deckel ist durch Fügen mit der Ventiltellerfläche verbunden. Der Deckel kann durch Laserschweißen. Elektronenstrahlschweißen, Widerstandsschweißen oder Reibschweißen materialschlüssig mit dem Teller verbunden sein.

Wenn die Entlastungsnut auf der Seite des Hohlraums angeordnet ist, bewirkt diese ebenfalls eine Vergrößerung der inneren Hohlraumoberfläche für den Kontakt mit dem flüssigen Kühlmittel- bzw. Natriumfüllung.

Bei einer beispielhaften Ausführungsform der vorliegenden Erfindung wird als Kühlmittel Natrium verwendet. Es können jedoch auch andere Alkali- bzw. Erdalkalimetalle oder Legierungen mit hinreichend geringem Schmelzpunkt verwendet werden.

Bei einer weiteren beispielhaften Ausführungsform der vorliegenden Erfindung verläuft die mindestens eine Entlastungsnut kreisförmig in dem Deckel um eine Ventilachse herum. Die Entlastungsnut ist in dieser Ausführungsform auf der Innenseite bzw. im Hohlraum des Ventils angeordnet. Die Entlastungsnut bewirkt durch eine Verringerung der Materialstärke des Deckels eine Erhöhung der Elastizität des Deckels in einem kreisförmigen Bereich innerhalb des Randes des Deckels. Weiterhin erhöht die Entlastungsnut die Oberfläche des Hohlraums und somit die Kontaktfläche mit dem Kühlmittel, wodurch der Wärmeübertrag von dem Deckel bzw. dem Ventilboden auf das Kühlmittel verbessert werden kann.

In einer weiteren beispielhaften Ausführungsform der vorliegenden Erfindung verläuft die mindestens eine Entlastungsnut auf einer Außenseite des Deckels im Bereich der Tellerfläche des Ventils. Eine hier angeordnete Entlastungsnut weist den Nachteil auf, dass es die Oberfläche des Brennraums vergrößert und somit den Wärmeübertrag von Verbrennungs-gasen auf den Ventilteller erhöht. Gleichzeitig kann eine Entlastungsnut an der Außenseite jedoch in Kombination mit einer Entlastungsnut auf der Innenseite die Elastizität gegenüber einer einzelnen Entlastungsnut deutlich erhöhen. Weiterhin können auf der Außenseite mehrere konzentrische Entlastungsnuten angebracht werden.

In einer zusätzlichen beispielhaften Ausführungsform des Ventils der vorliegenden Erfindung umfasst der Deckel in seiner Mitte eine pyramidenförmige oder kegelförmige Struktur, um das Kühlmittel in Radialrichtung des Ventiltellers zu leiten. Die kegelförmige Struktur kann die Form eines parabolischen Kegels aufweisen, und den Auftreffimpuls des Kühlmittels auf den Deckel vermindern, indem das Kühlmittel sanft umgeleitet wird, anstatt auf eine Fläche zu treffen, die sich senkrecht zur Bewegungsrichtung des Kühlmittels erstreckt. Eine Struktur kann die Form einer Fläche ähnlich einem Flamm'schen Paraboloiden aufweisen, um eine Belastung für eine Fügestelle des Deckels beim Auftreffen des Natriums zu verringern, und so die Lebensdauer des Ventils zu erhöhen. Der Flamm'sche Paraboloid ist nur ein Sonderfall eines parabolischen Kegels, der hier auch eingesetzt werden kann, um zu verhindern, dass ein nach unten strömendes Natrium einen großen Impuls auf den Deckel und damit auf eine Fügestelle des Deckels ausübt.

Bei einer weiteren beispielhaften Ausführungsform der vorliegenden Erfindung geht eine Entlastungsnut an einer Innenseite direkt in die kegelförmige Struktur in der Mitte über. Diese Ausführung lenkt ein sich nach unten in Richtung des Ventiltellers bewegendes Kühlmittel erst von der Mitte in Richtung des Randes des Ventiltellers ab. Bevor das Kühlmittel den Rand erreicht, fließt es in die Entlastungsnut, und wird beim Herausfließen aus der Entlastungsnut wieder nach oben in Richtung der Rückseite des Ventiltellers umgelenkt. Somit kann durch Zusammenwirken der kegelförmigen Struktur und der Entlastungsnut eine Umkehr der Strömung im Bereich des Ventiltellerrandes des Hohlraums erreicht werden. Das Kühlmittel kann entlang der Ventilteller-Rückseite geleitet werden, wodurch die Kühlung des Ventils weiter verbessert werden kann. Es ist ebenfalls möglich, dass im Bereich des Ventiltellerrandes eine Art "Vortex-Ring" bzw. ein Wirbelring entsteht d.h. eine torusförmige Strömung, die den Rand des Ventiltellers besonders gut kühlen kann.

In einer weiteren beispielhaften Ausführungsform des Ventils der vorliegenden Erfindung weist eine Entlastungsnut einen Querschnitt auf, der in Radialrichtung nach außen strömendes Kühlmittel in Richtung einer Ventilteller-Rückseite leitet. Diese Entlastungsnut ist an der Innenseite des Hohlraums angeordnet und weist eine steile Außenflanke auf, die mit einer Rundung in den Nutgrund übergeht. Eine dünne Schicht strömendes Natrium kann von dem Strömungskegel bzw. von der kegelförmigen Struktur direkt in die Entlastungsnut strömen und wird von dort in Richtung der Ventilteller-Rückseite geleitet. Je nach Formgebung des Hohlraums im Bereich der Ventilteller-Rückseite kann eine Rückwärtsströmung in Richtung der Ventilachse oder eine torusförmige Ringwirbelströmung erzeugt werden. Die Ringwirbelströmung rotiert dabei in einer Ebene, die durch die Ventilachse verläuft. Somit schwappt das Natrium nicht nur zwischen der heißen und der kalten Seite des Ventils hin und her, sondern wird durch die kegelförmige Struktur und die Form der Entlastungsrille in ein Strömungsmuster gedrängt, das den Wärmetransport weiter verbessern kann.

Idealerweise sollte der an der Ventiltellerfläche eingeschweißte Deckel samt der daran befindlichen Strukturen wie der Entlastungsrille(n) und der kegelförmigen Struktur so ausgeführt sein, dass er durch herkömmliche Verfahren geschmiedet werden kann, um die Herstellungskosten und damit die Ventilkosten so gering wie möglich zu halten.

Durch den Deckel mit der mindestens einen Entlastungsnut wird eine Fügestelle zwischen der Öffnung der Ventiltellerfläche und dem Deckel entlastet. Die Entlastungsnut verläuft in der Nähe der Fügestelle innen und/oder außen an dem Deckel. Die Entlastungsnut verringert die Materialstärke des Deckels und verleiht ihm eine größere Elastizität, was wiederum die Belastung der Fügestelle zwischen Deckel und Ventilteller verringert. Insgesamt kann ein durch eine kegelförmige Struktur weniger biegeelastischer Deckel damit wieder elastischer ausgebildet werden, sodass bei einer Belastung des Deckels nur ein Teil der Kräfte weiter an die Fügestelle übertragen werden. Insgesamt können die Nuten einen Teil der Belastung aufnehmen und dadurch eine Belastung der Fügestelle verringern und so die Gesamtlebensdauer des innengekühlten Ventils erhöhen. Bevorzugt werden innen und außen jeweils zwei Entlastungsnuten verwendet, um eine maximale Elastizität des Deckels zu erzielen. Die Anordnung der Entlastungsnuten kann eine Art Wellung erzeugen, mit der eine elastische Verbindung zwischen der Mitte des Deckels und dem Rand des Deckels erzeugt werden kann. Durch die Entlastungsnuten wird bei einer Durchbiegung des Deckels nach innen oder außen die Fügestelle entlastet, wodurch ein Versagen der Fügestelle verzögert oder vermieden werden kann. Der Deckel und der Ventilteller können durch Laserschweißen, Elektronenschweißen, Widerstandsschweißen oder Reibschweißen gefügt werden.

In einer anderen beispielhaften Ausführungsform des Ventils der vorliegenden Erfindung weist die mindestens eine Entlastungsnut eine Tiefe auf, die mindestens einem Drittel einer lokalen Höhe bzw. Materialstärke des Deckels entspricht und höchstens zwei Dritteln der lokalen Höhe bzw. Materialstärke des Deckels entspricht. Damit ist definiert, dass die Entlastungsnut eine erhebliche Verringerung der Materialstärke des Deckels erzeugt, die ebenfalls eine erhebliche Erhöhung der Elastizität des Deckels im Bereich der Entlastungsnut bewirkt.

In einer weiteren beispielhaften Ausführungsform des Ventils der vorliegenden Erfindung weist der Deckel im Bereich der mindestens einen Entlastungsnut eine um ein Viertel bis drei Viertel bevorzugt ein Drittel bis zwei Drittel und weiter bevorzugt um zwei Fünftel bis drei Fünftel verringerte Materialstärke auf. Diese Materialstärke betrifft auch Stellen, an denen mehrere Entlastungsnuten angeordnet sind. Diese relativ starke Verringerung der Materialstärke erzeugt im Bereich der Entlastungsnuten eine Art elastisches bzw. Folienscharnier, das Biegekräfte des Deckels von der Fügestelle des Deckels fernhalten kann.

Im Folgenden wird die vorliegende Erfindung anhand von Darstellungen beispielhafter

Ausführungsformen näher verdeutlicht. Die Figuren stellen lediglich schematische Darstellungen dar.
Figur 1 stellt ein herkömmliches innengekühltes Ventil dar.
Figur 1A zeigt einen Deckel für ein herkömmliches innengekühltes Ventil.
Figur 2 stellt ein erfindungsgemäßes innengekühltes Ventil mit einer Entlastungsnut auf dem Ventilteller dar.
Figur 2A zeigt einen Deckel für ein erfindungsgemäßes innengekühltes Ventil mit einer Entlastungsnut auf dem Ventilteller dar.
Figur 3 stellt ein erfindungsgemäßes innengekühltes Ventil mit einer Entlastungsnut auf der Seite des Hohlraums dar.
Figur 3A zeigt einen Deckel für ein erfindungsgemäßes innengekühltes Ventil mit einer Entlastungsnut auf dem Ventilteller dar.
Figur 4 stellt ein erfindungsgemäßes innengekühltes Ventil mit zwei Entlastungsnuten dar, wobei eine auf dem Ventilteller und eine auf der Seite des Hohlraums angeordnet ist.
Figur 4A zeigt einen Deckel für ein erfindungsgemäßes innengekühltes Ventil mit den zwei Entlastungsnuten von Figur 4.
Figur 5 stellt ein erfindungsgemäßes innengekühltes Ventil mit einer Entlastungsnut dar, die direkt in eine kegelförmige Struktur übergeht.
Figur 5A zeigt einen Deckel für ein erfindungsgemäßes innengekühltes Ventil mit der kegelförmigen Struktur, die in eine innenliegende Entlastungsnut übergeht, von Figur 5.
Figur 6 stellt ein erfindungsgemäßes innengekühltes Ventil mit einer Entlastungsnut, die direkt in eine kegelförmige Struktur übergeht, und einer weiteren außenliegenden Entlastungsnut.
Figur 7 zeigt ein erfindungsgemäßes innengekühltes Ventil mit insgesamt drei Entlastungsnuten und einer kegelförmigen Struktur.
Figur 7A stellt den Deckel des Ventils von Figur 5 dar.
Figur 8 zeigt einen Deckel mit insgesamt zwei Entlastungsnuten und einer kegelförmigen Struktur.
Figur 9 zeigt ein erfindungsgemäßes innengekühltes Ventil mit insgesamt zwei Entlastungsnuten und einer kegelförmigen Struktur.

Sowohl in der Beschreibung als auch in den Figuren werden gleiche oder ähnliche Bezugszeichen verwendet um auf gleiche oder ähnliche Komponenten und Elemente Bezug zu nehmen. Um die Beschreibung so kurz und knapp wie möglich zu halten werden Elemente die bereits in einer Figur beschrieben wurden in weiteren Figuren nicht gesondert beschrieben um Redundanz zu vermeiden.

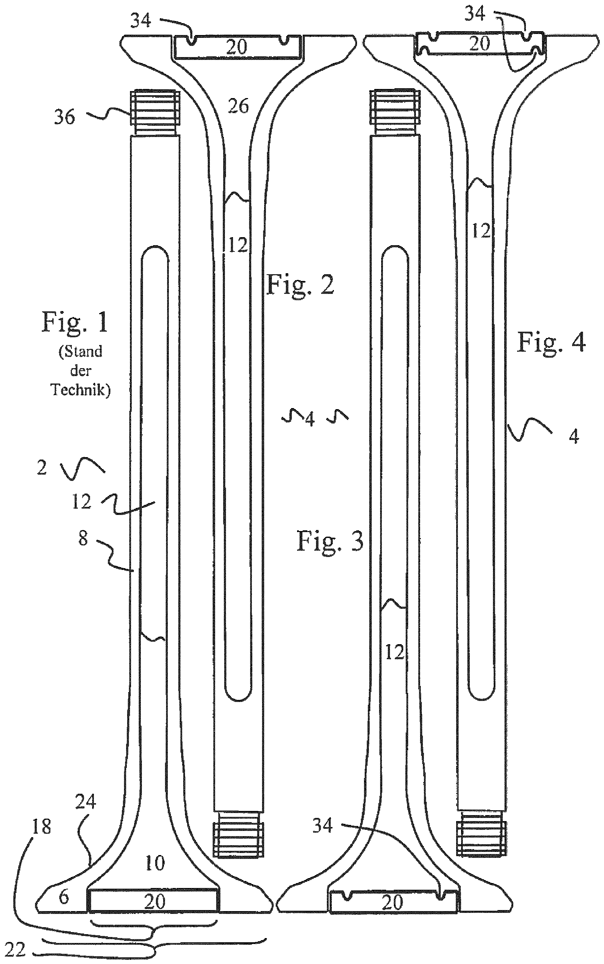

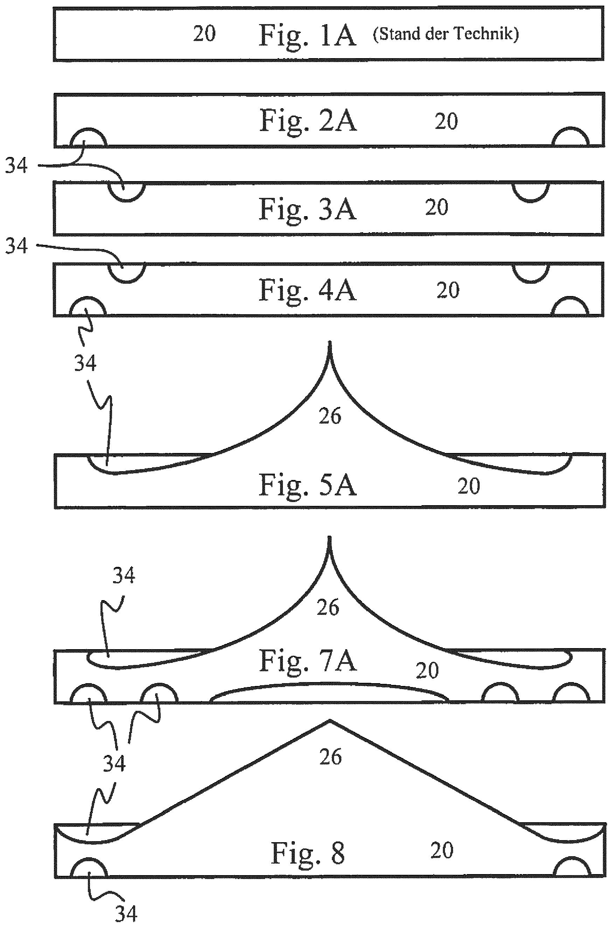

Figur 1 stellt ein herkömmliches innengekühltes Ventil 2 mit einem Ventilschaft 8 dar, der an einem unteren Ende in einem Ventilteller 6 ausläuft. Der Ventilschaft 8 endet oben am Schaftende 36, an dem das Ventil üblicherweise angesteuert wird. Innen ist das Ventil mit einem Hohlraum 10 versehen, der mit einem Kühlmittel 12 gefüllt ist. Als Kühlmittel wird üblicherweise Natrium verwendet, das bei Betriebstemperaturen eines Verbrennungsmotors in einem flüssigen Zustand vorliegt. Üblicherweise ist nicht der gesamte Hohlraum sondern nur 2/3 bis 3/4 des Hohlraums des Ventils mit Natrium gefüllt. Es ist ebenfalls möglich lediglich 1/4 oder 1/3 des Hohlraums des Ventils mit Natrium zu füllen. Im Betrieb bewegt sich das Natrium im Ventilschaft 8 bzw. im Hohlraum 10 des Ventilschafts 8 auf und ab und transportiert dabei Wärme von dem Ventilteller 6 in Richtung des gekühlten Ventilschafts 8.

Das Natrium bewegt sich dabei bei jedem Öffnungs- bzw. Schließvorgang innerhalb des Ventils 2. Der Hohlraum 10 wurde bei dem Ventil 2 dadurch erzeugt, dass der Ventilteller 6 an der Ventiltellerfläche 22 mit einer Öffnung 18 versehen wurde. Durch die Öffnung 18 wurde der Hohlraum 10 in den Ventilteller 6 und den Ventilschaft 8 eingebracht. Nach einem Einfüllen des Natrium-Kühlmittels 12 wurde die Öffnung 18 durch einen Deckel 20 verschlossen. Der Deckel wurde durch Laserschweißen, Elektronenstrahlschweißen oder Widerstandsschweißen mit dem Ventilteller gefügt. Die Ventilteller-Rückseite 24 weist bei dieser Ausführung keine Fügestellen auf, und der Ventilteller kann einstückig mit dem Ventilschaft hergestellt werden, so dass eine Gefahr eines Ventiltellerabrisses minimiert werden kann.

Figur 1A zeigt einen Deckel für ein herkömmliches innengekühltes Ventil der einfach nur eine einfache Metallscheibe bildet.

Figur 2 stellt ein erfindungsgemäßes innengekühltes Ventil mit einer Entlastungsnut auf dem Ventilteller dar. In Figur 2 ist das erfindungsgemäße Ventil 4 wie das Ventil von Figur 1 mit einer Öffnung an dem Ventilteller versehen, der mit einem Deckel 20 verschlossen ist. Der Deckel 20 ist mit einer umlaufenden Entlastungsnut 34 mit einem runden Profil versehen. Die Entlastungsnut 34 verringert Lokal die Materialstärke des Deckels 20 sodass bei einer Durchbiegung des Deckels diese Durchbiegung geringere Kräfte an einer Fügestelle des Deckels mit dem Rand der Öffnung erzeugt. Wenn der Deckel bei einem Verbrennungsprozess durch die Verbrennungsgase nach innen gebogen wird kann sich der Rand des Deckels im Bereich der Entlastungsnut verformen. Dadurch muss die Fügestelle eine Geringere Belastung aufnehmen und wird daher eine höhere Lebensdauer aufweisen. Auch wenn kaltes Kühlmittel aus dem Ventilschaft die Innenseite des Deckels abkühlt wird sich dieser leicht konvex verformen. Auch eine derartige Verformung wird aufgrund der Entlastungsnut nicht mehr so stark auf die Fügestelle zwischen Deckel und Ventilteller übertragen. Auch das beim Öffnen des Deckels auf den Deckel auftreffende Kühlmittel überträgt einen Impuls auf den Deckel der zu einer Verformung des Deckels beitragen kann.

Figur 2A zeigt den Deckel von Figur 2 in einer Schnittansicht. Hier ist die Entlastungsnut 34 unten an dem Deckel 20 angeordnet.

Figur 3 stellt ein weiteres erfindungsgemäßes innengekühltes Ventil mit einer Entlastungsnut auf der Innenseite des Deckels und somit in dem Hohlraum des Ventils dar. In Figur 3 ist das erfindungsgemäße Ventil 4 wie das Ventil von Figur 1 mit einer Öffnung an dem Ventilteller versehen, der mit einem Deckel 20 verschlossen ist. Der Deckel 20 ist mit einer umlaufenden Entlastungsnut 34 mit einem runden Profil versehen, die hier aber auf der Innenseite liegt, und damit die Oberfläche des Hohlraums vergrößert was einen verbesserten Wärmeübertrag von dem Deckel auf das Kühlmittel bewirkt. Auch hier verringert die Entlastungsnut 34 Lokal die Materialstärke des Deckels 20, daher wird eine Durchbiegung des Deckels geringere Kräfte an einer Fügestelle des Deckels mit dem Rand der Öffnung erzeugen. Die Gründe für eine Durchbiegung des Deckels wurden bereits zu Figur 2 diskutiert und werden daher hier nicht wiederholt.

Figur 3A zeigt den Deckel von Figur 3 in einer Schnittansicht. Hier ist die Entlastungsnut 34 oben an dem Deckel 20 angeordnet.

Figur 4 stellt eine Schnittansicht durch ein erfindungsgemäßes innengekühltes Ventil dar. In der Figur 4 sind zwei Entlastungsnuten 34 an dem Deckel 20 vorgesehen. Eine Entlastungsnut befindet sich auf der Seite des Ventiltellers bzw. der Außenseite und eine Entlastungsnut 34 ist so angeordnet, dass sie in dem Hohlraum des innengekühlten Ventils liegt. Beide Entlastungsnuten 34 verringern die Materialstärke des Deckels 20 nahe seinem Rand. Durch die Entlastungsnuten kann sich der Deckel leichter Durchbiegen auch wenn der Rand des Deckels durch eine Fügestelle festgelegt ist.

Wenn sich ein herkömmlicher Deckel aufgrund eines Druckanstiegs im Brennraum oder aufgrund einer Temperaturdifferenz in dem Ventil leicht durchbiegt, wirken sehr viel höhere Kräfte auf eine Fügestelle zwischen Deckel und Ventilteller. Diese Kräfte können ausreichen um eine Laserschweißnaht, eine Elektronenschweißnaht oder eine Widerstandsschweißnaht zwischen dem Deckel und dem Ventilteller zu überlasten und zu zerstören.

Durch die Entlastungsnuten kann der Randbereich des Deckels elastischer gestaltet werden. Bei einer Durchbiegung des Deckels nach innen kann sich der Randbereich durchbiegen und die Belastung der Fügestelle am Rand deutlich verringern. Je nach Tiefe und Breite der Entlastungsnuten kann die Entlastung der Fügestellen entsprechend stark ausfallen. Auch wenn der vorliegende Deckel durch die Leitschaufeln recht Stabil und Biegesteif sein sollte unterliegt er jedoch durch das Kühlmittel relativ starken thermischen Spannungen die ebenfalls durch die Entlastungsnuten von der Fügestelle am Rand abgekoppelt werden können.

Figur 4A zeigt eine Schnittansicht des Deckels 20 mit im Randbereich angebrachten Entlastungsnuten 34, die jeweils an der Innenseite und an einer Außenseite angeordnet sind. Es ist ebenfalls möglich den Deckel 20 von Figur 4A verkehrt herum einzubauen, wobei die Entlastungsnut 34 mit dem größeren Durchmesser außen am Ventilteller angeordnet ist und die Entlastungsnut 34 mit dem kleineren Durchmesser innen in dem Hohlraum angeordnet ist. Es ist ebenfalls möglich einen innere und eine äußere Entlastungsnut mit jeweils gleichem Durchmesser einzusetzen.

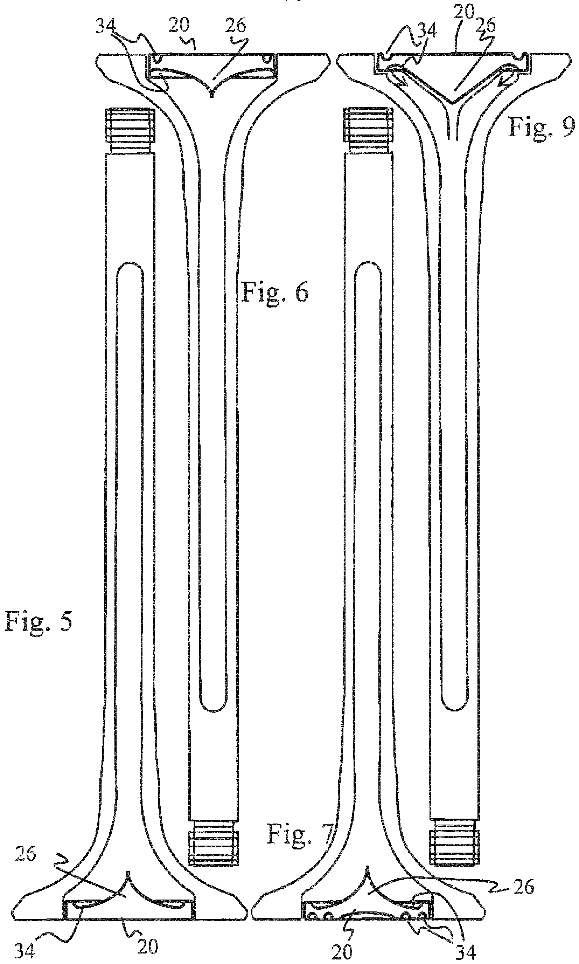

Figur 5 zeigt ein erfindungsgemäßes Ventil mit einem Deckel mit einer Entlastungsnut und einer kegelförmigen Struktur 26 die dazu dient ein sich im Ventilschaft in Richtung des Ventiltellers bewegendes Kühlmittel in Richtung des Ventiltellerrandes umzulenken. Durch die Kegelförmige Struktur wird der Auftreffimpuls des Kühlmittels auf dem Deckel verringert und die Fügestelle zwischen Deckel und Ventilteller wird entlastet. In der Dargestellten Ausführung ist die Kegelförmige Struktur als parabolischen Kegel ausgeführt, um das strömende Kühlmittel möglichst ohne Impulsspitzen in Richtung des Ventiltellerrandes zu leiten. Bei der dargestellten Ausführung geht der parabolische Kegel direkt in die Entlastungsnut 34 über um eine möglichst glatte Strömung im Bereich des Ventiltellers zu erreichen. Am Rand, bzw. an der äußeren Flanke der Entlastungsnut wird die Strömungsrichtung des Kühlmittels nach oben umgelenkt, sodass das Kühlmittel im Hohlraum entlang der Rückseite des Ventiltellers entlangströmt. Es ist ebenfalls möglich die äußere Flanke der Entlastungsnut und den Hohlraum des Ventils so zu gestalten, dass die Strömung des Kühlmittels nach oben um- und zurückgelenkt wird, sodass das Kühlmittel im Hohlraum entlang des Randes Ventiltellers einen Wirbelring ausbildet, zumindest bis dieser Bereich des Hohlraums mit Kühlmittel gefüllt ist. Der Wirbelring führt dabei eine Wirbelströmung in einer Ebene aus, in der die Ventilachse liegt.

Figur 5A zeigt eine Schnittansicht des Deckels 20 mit der im Randbereich angebrachten Entlastungsnut 34, die fließend in die kegelförmige Struktur 26 in der Mitte übergeht. Ein in der Mitte von oben herunterströmendes Kühlmittel wird zuerst durch die kegelförmige Struktur 26 nach außen in Richtung Rand und dann in die Entlastungsnut 34 geleitet. Der äußere Rand der Entlastungsnut 34 leitet das Kühlmittel wieder zurück in Richtung Ventiltellerrückseite. Durch das Zusammenwirken der Entlastungsnut und der kegelförmigen Struktur 26 können sowohl eine verbesserte Haltbarkeit des Fügestelle zwischen Deckel und Ventilteller als auch eine Optimierte Strömung in dem Hohlraum des Ventils erreicht werden. Durch einen glatten Übergang zwischen der kegelförmigen Struktur 26 und einem entsprechend angepassten asymmetrischen Querschnitt der Entlastungsnut 34 können bessere Strömungsverhältnisse erreicht werden als bei einer einfachen Kombination eines Strahlführungskegels und einer Entlastungsnut 34 alleine.

Figur 6 entspricht im Wesentlichen der Figur 5, wobei der Deckel 30 mit einer weiteren Entlastungsnut 34 an der Tellerfläche versehen ist. Im Vergleich zu der Figur 5 ergibt sich damit eine weiter gesteigerte Elastizität des Deckels und damit eine erhöhte Entlastung der Fügestelle.

Figur 7 entspricht im Wesentlichen der Figur 5 bzw. 6, wobei der Deckel 30 mit zwei weitere Entlastungsnuten 34 an der Tellerfläche aufweist. Im Vergleich zu der Figur 5 und 6 ergibt sich damit eine noch weiter gesteigerte Elastizität des Deckels und damit eine weiter erhöhte Entlastung der Fügestelle.

Figur 7A zeigt eine Schnittansicht des Deckels von Figur 7 an denen die zwei äußeren Entlastungsnuten 34 und die Innere Entlastungsnut 34 deutlich zu erkennen sind. Auch der glatte Übergang zwischen der kegelförmigen Struktur 26 und der inneren Entlastungsnut ist klar zu erkennen. In Figur 7A ist ebenfalls deutlich zu sehen, dass die innere Entlastungsnut nicht symmetrisch ausgeführt ist. Die äußere Flanke der inneren Entlastungsnut 34 der Figur 7A weist nach innen bzw. ist hinterschnitten und leitet daher das Kühlmittel nach oben und zurück in Richtung der Ventilachse.

Figur 8 zeigt einen Schnitt durch einen Deckel mit einer kegelförmigen Struktur 26, die einen glatten Kreiskegel bildet. Die innere Entlastungsnut 34 ist hier direkt am Rand des Deckels 20 angeordnet.

Figur 9 zeigt ein erfindungsgemäßes Ventil mit einem Deckel der im Wesentlichen dem der Figur 8 entspricht. Zusätzlich ist in Figur 9 die Strömung des Kühlmittels in dem Hohlraum beim Öffnen des Ventils dargestellt.

Es sollte klar sein, dass hier sowohl innen als auch außen jeweils mehrere Entlastungsnuten eingesetzt werden können, um die Elastizität am Rand des Deckels 20 zu erhöhen. Es ist ebenfalls vorgesehen alle einzelnen Merkmale der Figuren zu weiteren Ausführungsformen zu kombinieren, so können beispielsweise die Leitschaufeln des Deckels mit entsprechenden wendelförmigen Leitschaufeln in dem Ventilschaft kombiniert werden. Es ist ebenfalls möglich einen die wendelförmigen Leitschaufeln in dem Ventilschaft mit einem Deckel zu kombinieren, der mit Entlastungsnuten 34 versehen ist. Es ist zudem vorgesehen eine Leitschaufel in dem Ventilschaft anzuordnen, die einem sich nach oben in Richtung Ventilschaftende bewegendes Kühlmittel in eine Rotationsströmung um eine Ventilachse versetzt. Es kann ebenfalls vorgesehen sein die wendelförmigen Leitschaufeln vor einem oberen Ende des Ventilschafts enden zu lassen, um eine Rotationsströmung nahe dem Schaftende möglichst wenig zu stören.

### Bezugszeichenliste

- 2: innengekühltes Ventil gemäß des Standes der Technik
- 4: erfindungsgemäßes innengekühltes Ventil
- 6: Ventilteller
- 8: Ventilschaft
- 10: Hohlraum
- 12: Kühlmittel
- 18: Öffnung
- 20: Deckel
- 22: Ventiltellerfläche
- 24: Ventilteller-Rückseite
- 26: kegelförmige Struktur
- 32: Fügestelle
- 34: Entlastungsnut
- 36: Schaftende

## Patentansprüche

1. Gekühltes Ventil (4) für Verbrennungsmotoren, umfassend
einen Ventilteller (6),
einen Ventilschaft (8), sowie einen
Hohlraum (10) innerhalb des Ventilschafts (8) und des Ventiltellers (6), und
ein Kühlmittel (12), das in dem Hohlraum (10) angeordnet ist,
wobei das Ventil mindestens zweiteilig ist und an einer Ventiltellerfläche (22) eine Öffnung (18) aufweist, die mit einem Deckel (20) verschlossen ist,
**dadurch gekennzeichnet, dass** der Deckel (20) zusätzlich mit mindestens einer Entlastungsnut (34) versehen ist, die eine Fügestelle (32) zwischen der Öffnung (18) der Ventiltellerfläche (22) und dem Deckel (20) entlastet.

2. Gekühltes Ventil (4) für Verbrennungsmotoren, gemäß Anspruch 1, wobei das Kühlmittel (12) Natrium ist.

3. Gekühltes Ventil (4) für Verbrennungsmotoren, gemäß Anspruch 1 oder 2, wobei die mindestens eine Entlastungsnut (34) kreisförmig in dem Deckel um eine Ventilachse verläuft.

4. Gekühltes Ventil (4) für Verbrennungsmotoren, gemäß Anspruch 1, 2 oder 3, wobei die mindestens eine Entlastungsnut (34) auf einer Innenseite des Deckels (20) in dem Hohlraum (10) verläuft.

5. Gekühltes Ventil (4) für Verbrennungsmotoren, gemäß einem der vorstehenden Ansprüche, wobei die mindestens eine Entlastungsnut (34) auf einer Außenseite des Deckels (20) verläuft.

6. Gekühltes Ventil (4) für Verbrennungsmotoren, gemäß einem der vorstehenden Ansprüche 3 bis 5, **dadurch gekennzeichnet, dass** der Deckel (20) eine kegelförmige Struktur (26) in der Mitte umfasst, um das Kühlmittel (12) in Radialrichtung des Ventiltellers (6) zu leiten.

7. Gekühltes Ventil (4) für Verbrennungsmotoren, gemäß Anspruch 6, **dadurch gekennzeichnet, dass** eine Entlastungsnut (34) an einer Innenseite direkt in die kegelförmige Struktur (26) in der Mitte übergeht.

8. Gekühltes Ventil (4) für Verbrennungsmotoren, gemäß Anspruch 7, **dadurch gekennzeichnet, dass** eine Entlastungsnut (34) einen Querschnitt aufweist der in Radialrichtung nach außen strömendes Kühlmittel (12) in Richtung einer Ventilteller-Rückseite (24) leitet.

9. Gekühltes Ventil (4) für Verbrennungsmotoren, gemäß einem der vorstehenden Ansprüche, **dadurch gekennzeichnet, dass** eine Entlastungsnut (34) eine Tiefe aufweiset die mindestens ein Drittel einer Höhe des Deckels entspricht und höchstens zwei Dritteln der Höhe des Deckels entspricht.

10. Gekühltes Ventil (4) für Verbrennungsmotoren, gemäß einem der vorstehenden Ansprüche, **dadurch gekennzeichnet, dass** der Deckel (20) im Bereich der mindestens einen Entlastungsnut (34) eine um ein Viertel bis drei Viertel bevorzugt ein Drittel bis zwei Drittel und weiter bevorzugt um zwei Fünftel bis drei Fünftel verringerte Materialstärke aufweist.

## Claims

1. A cooled valve (4) for combustion engines, comprising
a valve disk (6),
a valve stem (8), as well as
a cavity (10) within the valve stem (8) and the valve disk (6), and a coolant (12), which is disposed in the cavity (10),
wherein the valve is at least two-part and has an opening (18) on a valve disk face (22), which is closed with a cover (20),
**characterized in that** the cover (20) additionally is provided with at least one relief groove (34), which relieves a joint (32) between the opening (18) of the valve disk face (22) and the cover (20).

2. The cooled valve (4) for combustion engines according to claim 1, wherein the coolant (12) is sodium.

3. The cooled valve (4) for combustion engines according to claim 1 or 2, wherein the at least one relief groove (34) extends circularly in the cover around a valve axis.

4. The cooled valve (4) for combustion engines according to claim 1, 2 or 3, wherein the at least one relief groove (34) extends on an inside of the cover (20) in the cavity (10).

5. The cooled valve (4) for combustion engines according to any one of the preceding claims, wherein the at least one relief groove (34) extends on an outside of the cover (20).

6. The cooled valve (4) for combustion engines according to any one of the preceding claims 3 to 5, **characterized in that** the cover (20) comprises a conical structure (26) in the centre in order to guide the coolant (12) in radial direction of the valve disk (6).

7. The cooled valve (4) for combustion engines according to claim 6, **characterized in that** a relief groove (34) at an inside merges directly into the conical structure (26) in the centre.

8. The cooled valve (4) for combustion engines according to claim 7, **characterized in that** a relief groove (34) has a cross section which guides coolant (12) that is flowing outwardly in radial direction in direction of a rear side (24) of the valve disk.

9. The cooled valve (4) for combustion engines according to any one of the preceding claims, **characterized in that** a relief groove (34) has a depth, which corresponds to at least one third of a height of the cover and corresponds to at most two thirds of the height of the cover.

10. The cooled valve (4) for combustion engines according to any one of the preceding claims, **characterized in that** the cover (20) has a material thickness in the region of the at least one relief groove (34), which is reduced by one quarter to three quarters, preferably one third to two thirds and further preferably two fifths to three fifths.

## Revendications

1. Soupape refroidie (4) destinée à des moteurs à combustion interne, comprenant
une tête de soupape (6),
une tige de soupape (8), ainsi
qu'une cavité (10) à l'intérieur de la tige de soupape (8) et de la tête de soupape (6), et
un agent réfrigérant (12), qui est placé dans la cavité (10),
la soupape étant au moins en deux éléments et comportant sur une surface de tête de soupape (22) une ouverture (18) qui est fermée par un couvercle (20),
**caractérisée en ce que** le couvercle (20) est muni additionnellement d'au moins une rainure de décharge (34) qui décharge une zone de joint (32) entre l'ouverture (18) de la surface de tête de soupape (22) et le couvercle (20).

2. Soupape refroidie (4) destinée à des moteurs à combustion interne, selon la revendication 1, l'agent réfrigérant (12) étant du sodium.

3. Soupape refroidie (4) destinée à des moteurs à combustion interne, selon la revendication 1 ou 2, l'au moins une rainure de décharge (34) s'écoulant en forme de cercle dans le couvercle autour d'un axe de la soupape.

4. Soupape refroidie (4) destinée à des moteurs à combustion interne, selon la revendication 1, 2 ou 3, l'au moins une rainure de décharge (34) s'écoulant sur une face interne du couvercle (20) dans la cavité (10) .

5. Soupape refroidie (4) destinée à des moteurs à combustion interne, selon l'une quelconque des revendications précédentes, l'au moins une rainure de décharge (34) s'écoulant sur une face extérieure du couvercle (20).

6. Soupape refroidie (4) destinée à des moteurs à combustion interne, selon l'une quelconque des revendications précédentes 3 à 5, **caractérisée en ce que** le couvercle (20) comprend au centre une structure cunéiforme (26) pour diriger l'agent réfrigérant (12) dans la direction radiale de la tête de soupape (6).

7. Soupape refroidie (4) destinée à des moteurs à combustion interne, selon la revendication 6, **caractérisée en ce que** sur une face interne, une rainure de décharge (34) passe directement dans la structure cunéiforme (26) au centre.

8. Soupape refroidie (4) destinée à des moteurs à combustion interne, selon la revendication 7, **caractérisée en ce qu'**une rainure de décharge (34) comporte une section transversale qui dirige l'agent réfrigérant (12) circulant vers l'extérieur en direction radiale dans la direction d'une face arrière de tête de soupape (24).

9. Soupape refroidie (4) destinée à des moteurs à combustion interne, selon l'une quelconque des revendications précédentes, **caractérisée en ce qu'**une rainure de décharge (34) présente une profondeur qui correspond à au moins un tiers d'une hauteur du couvercle et qui correspond au maximum à deux tiers de la hauteur du couvercle.

10. Soupape refroidie (4) destinée à des moteurs à combustion interne, selon l'une quelconque des revendications précédentes, **caractérisée en ce que** dans la zone de l'au moins une rainure de décharge (34), le couvercle (20) comporte une épaisseur de matière réduite de la valeur d'un quart à trois quarts, de préférence, d'un tiers à deux tiers et de manière plus préférentielle de deux cinquièmes à trois cinquièmes.
